# EUROPÄISCHE PATENTSCHRIFT

(11) **EP 3 100 940 B1**
(45) Veröffentlichungstag und Bekanntmachung des Hinweises auf die Patenterteilung: **18.10.2017**
(21) Anmeldenummer: 16172023.0
(22) Anmeldetag: 30.05.2016
(51) Int. Cl.: B62L 3/02, B62M 1/14

(54) **BREMSHEBELANORDNUNG FÜR EIN FAHRZEUG MIT KURBELANTRIEB**
BRAKE LEVER ASSEMBLY FOR A VEHICLE WITH A CRANK DRIVE
SYSTEME DE LEVIER DE FREIN POUR VEHICULE AVEC ESSIEU A MANIVELLE

(30) Priorität: 03.06.2015 DE 102015006888
(43) Veröffentlichungstag der Anmeldung: 07.12.2016
(73) Patentinhaber: Otto Bock Mobility Solutions GmbH, 07426 Königsee (DE)
(72) Erfinder: Boer, René, 07407 Rudolstadt (DE); Döring, Florian, 09603 Großschirma (DE); Trapp, Matthias, 07426 Königsee-Rottenbach (DE)
(74) Vertreter: Rehmann, Thorsten

(56) Entgegenhaltungen:
- DE-A1- 4 321 558
- DE-U1- 29 501 408
- FR-A1- 2 762 282

## Beschreibung

Die Erfindung betrifft eine Bremshebelanordnung für ein Fahrzeug mit Kurbelantrieb mit einem Betätigungshebel, der über ein Gelenk schwenkbar in einem an einer mit einem Kurbelarm drehbar verbundenen Kurbel angeordneten Gehäusekörper gelagert ist und zur Betätigung einer Bremse vorgesehen ist. Bei einem solchen Fahrzeug kann es sich um ein Fahrrad, ein Trainingsgerät, ein Boot oder dergleichen mit oder ohne Elektrounterstützung handeln. Der Kurbelantrieb kann als Handkurbelantrieb oder als Fußkurbelantrieb ausgebildet sein.
Ein Fahrrad mit Handkurbelantrieb ist beispielsweise aus der DE 295 01 408 U1 bekannt, sie offenbart die Präambel des Anspruchs 1. Aus der DE 298 04 597 U1 ist ein Fahrrad bekannt, das als Vorsatzfahrrad zum Antrieb eines Rollstuhles dienen kann.
Fahrräder mit Handkurbelantrieb werden auch als Mehrspur-Fahrräder für in ihrer Bewegungsfreiheit eingeschränkte Personen angeboten. An dem Lenker solcher Fahrräder kann eine Bremshebelanordnung vorgesehen sein, wie sie beispielsweise für Rennräder, also zur Verwendung an einem gebogenen Lenker, bekannt sind. Eine solche Bremsanordnung ist beispielsweise in der DE 101 38 271 A1 beschrieben.
Für auch in den Händen und Armen in ihrer Bewegungsfreiheit eingeschränkte Menschen, insbesondere Tetraplegiker, sind solche übliche Bremshebelanordnungen nicht bedienbar. Hierzu werden dann "Rücktrittbremsen" vorgesehen, bei denen zur Betätigung der Bremse der Handkurbelantrieb in die entgegengesetzte Richtung bewegt werden muss, oder es werden bei Zweispur-Fahrzeugen Bremshebelanordnungen am Fahrgestell vorgesehen, die der Fahrer mit dem Ellbogen betätigen kann. Beide Ausführungsformen sind konstruktiv aufwändig. Die Anordnung des Bremshebels am Fahrgestell hat insbesondere Nachteile, wenn das Fahrzeug dann gebremst werden muss, wenn sich der Kurbelarm gerade in seiner vorderen Stellung befindet, der Arm oder das Bein des Fahrers also nahezu gestreckt ist, oder wenn eine Kurvenfahrt eingeleitet wurde, der Fahrer also beide Arme am Lenker benötigt, um das Fahrzeug stabil in der eingeschlagenen Richtung zu halten.

Von dieser Problemstellung ausgehend soll die eingangs beschriebene Bremshebelanordnung so verbessert werden, dass sie auch von Menschen bedient werden kann, deren Bewegungsfähigkeit der Extremitäten, insbesondere der Arme/Hände eingeschränkt ist, und insbesondere von Tetraplegikern bedient werden kann.

Zur Problemlösung zeichnet sich eine gattungsgemäße Bremshebelanordnung dadurch aus, dass der Betätigungshebel über mindestens ein zweites Gelenk mit der Kurbel verbunden ist.

Durch diese Ausgestaltung kann der Fahrer den Betätigungshebel quer zur Fahrtrichtung bewegen und dadurch die Betätigung der Bremse durch Bewegung beispielsweise des gesamten Armes quer zur Längsrichtung des Fahrrades einleiten.

Vorzugsweise ist zwischen dem Betätigungshebel und dem zweiten Gelenk ein erster Lenker angeordnet, der insbesondere vorzugsweise an seinem dem zweiten Gelenk gegenüberliegenden Ende in einem Schlitz verschiebbar geführt ist. Durch diese Lenkeranordnung, die ein Hebelgetriebe darstellt, kann die Betätigungskraft unterstützt und der Betätigungsweg begrenzt werden.

Der Schlitz ist vorzugsweise am Betätigungshebel vorgesehen.

Anstatt den ersten Lenker in einem Schlitz zu führen, kann er auch an seinem dem zweiten Gelenk gegenüberliegenden Ende gelenkig mit einem zweiten Lenker verbunden sein, der wiederum gelenkig am Betätigungshebel angeordnet ist.

Der Bremshebel ist zur Betätigung der Bremse vorzugsweise mit einem Seilzug oder einem Hydraulikzylinder verbindbar. Wenn eine elektrische bzw. kabellose Bremse zum Einsatz gelangt, kann er auch mit einem Schalter oder Sensor verbindbar sein.

Der erste Lenker ist vorzugsweise mit dem Seilzug oder mit dem Hydraulikzylinder verbindbar. Diese Anbindung entspricht der herkömmlichen Anbindung mit der Bremse bei einem Fahrrad mit Handkurbelantrieb. Die erfindungsgemäß ausgebildete Betätigungshebelanordnung kann als Austauschteil für handelsübliche Bremsenanordnung vorgesehen sein. Wird anstelle einer Seilzug- oder Hydraulikbremse eine elektrische bzw. kontaktlose Bremse verwendet, ist der erste Lenker dann mit dem Schalter oder Sensor verbindbar.

Vorzugsweise ist der Betätigungshebel T-förmig ausgebildet und/oder weist an seinem freien Ende einen Bügel auf, so dass sich eine U-förmige Ausgestaltung der Bremshebelanordnung einstellt, die nach oben offen ist und in die der Fahrer zum Beispiel seine Hand bzw. das Ende des Unterarmes einführen kann.

Der Betätigungshebel kann ein rohrförmiger Körper sein, der auch mehrteilig ausgestaltet sein kann. Der Gehäusekörper ist vorzugsweise mit der Kurbel verschraubt. Ebenso ist der Bügel vorzugsweise mit dem Betätigungshebel verschraubt. Die gesamte Bremshebelanordnung kann auch als Bauteil am freien Ende des Kurbelarmes angeschraubt sein. Die Verbindung am Kurbelarm erfolgt vorzugsweise auch über den Gehäusekörper.

Mit Hilfe einer Zeichnung sollen zwei Ausführungsbeispiele der Erfindung nachfolgend näher erläutert werden. Es zeigen:
- Figur 1 -: die perspektivische Darstellung eines Fahrgestells eines Zweispur-Fahrrades;
- Figur 2 -: die perspektivische Darstellung einer ersten Ausführungsform einer erfindungsgemäßen Bremshebelanordnung;
- Figur 3 -: die Ausführungsform nach Figur 2 im Teilschnitt;
- Figur 4 -: eine zweite Ausführungsform einer Bremshebelanordnung im Teilschnitt;
- Figur 5 -: die Ausführungsform nach Figur 4 in perspektivischer Darstellung;

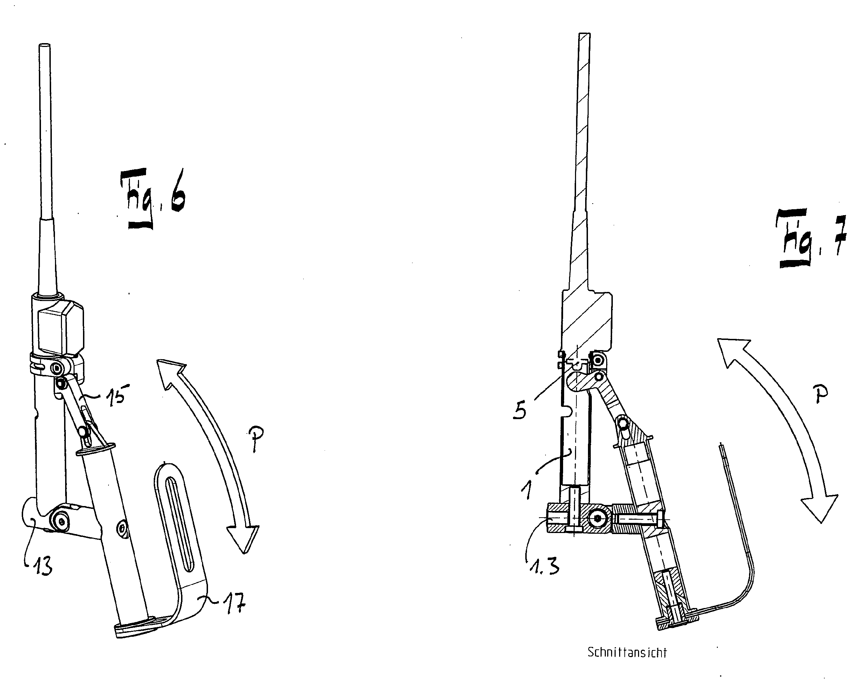

- Figur 6 -: die perspektivische Darstellung einer weiteren Ausführungsform einer erfindungsgemäßen Bremshebelanordnung;
- Figur 7: die Ausführungsform nach Figur 6 im Teilschnitt.

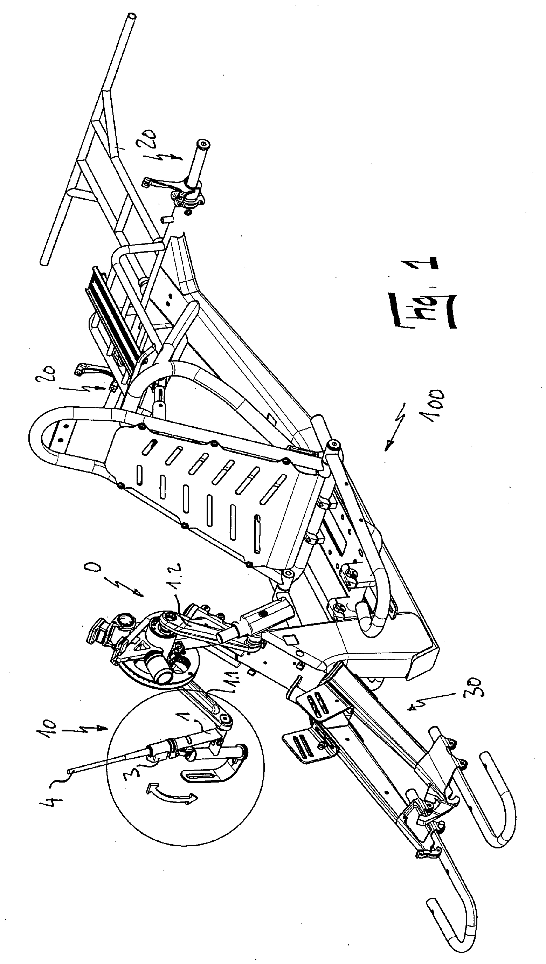

Insbesondere von behinderten Menschen werden Fahrräder mit Handantrieb auch als Zweispur-Fahrräder verwendet. Bei dem in Figur 1 dargestellten Fahrgestell eines solchen Fahrrades sind - nicht gezeigt - hinten an den Achsen 20 zwei Räder und vorne an der Gabel 30 ein Antriebsrad angeordnet, das über den Kurbelantrieb 0 angetrieben und gelenkt wird. Der Kurbelantrieb 0 ist mit zwei gegenüberliegenden Kurbelarmen 1.1, 1.2 versehen, an deren freien Ende gegenüber den Kurbelarmen 1.1, 1.2 drehbare Kurbeln 1 befestigt sind. Die Kurbeln 1 entsprechen den Pedalen eines Tretantriebes. Die Bremshebelanordnung 10 ist über einen Seilzug beziehungsweise einen Hydraulikzylinder 3 und eine Hydraulikleitung 4 mit der nicht näher dargestellten Bremse am Vorderrad und/oder den Hinterrädern verbunden.

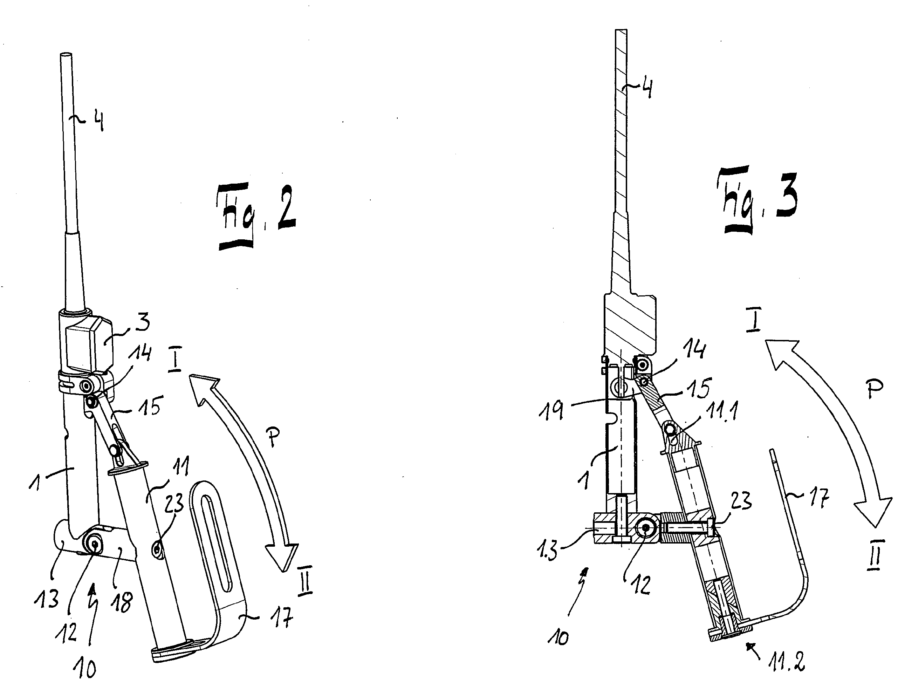

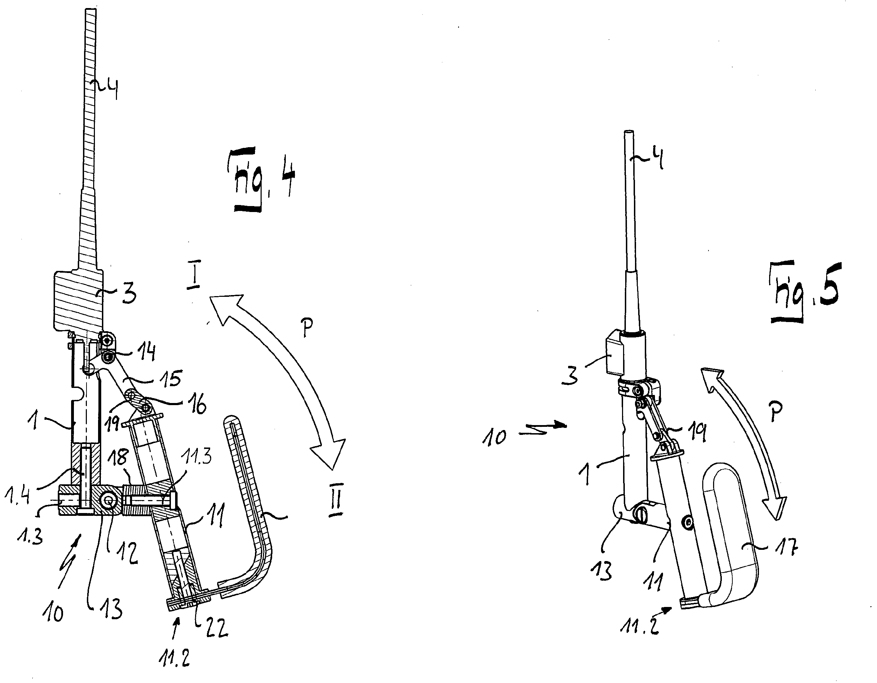

Die Bremshebelanordnung 10 besteht aus der Kurbel 1, die über die Gewindebohrung 1.3 mit den Kurbelarmen 1.1, 1.2 verschraubt werden kann. Mit der Kurbel 1 verbunden ist ein Gehäusekörper 13. Dieser kann einstückig an der Kurbel 1 ausgebildet oder wie die Figuren 3 und 4 zeigen, über die Schraube 1.4 festgeschraubt sein. Über ein in dem Gehäusekörper 13 vorgesehenes erstes Gelenk 12 ist der Betätigungshebel 11 schwenkbar in der Kurbel 1 gelagert. An seinem vorderen Ende ist der Betätigungshebel 11 in dem in den Figuren 2 und 3 gezeigten Ausführungsbeispiel mit einem Schlitz 11.1 (Langloch) versehen, in dem das freie Ende eines ersten Hebels 15 längsverschieblich gelagert ist. Das andere Ende 11.2 des Hebels 15 ist über das zweite Gelenk 14 mit der Kurbel 1 verbunden. An dem hinteren Ende 11.2 des Betätigungshebels 11 ist ein Bügel 17 angeschraubt, der zusammen mit dem Betätigungshebel 11 eine nach oben offene Schlaufe bildet, in die die Hand oder das Ende des Armes des Fahrers eingreifen kann. Über den Hebel 15 und einen am zweiten Gelenk 14 angreifenden Hebel 19 ist der Betätigungshebel 11 mit dem Seilzug (Bowdenzug) oder einer Kolbenstange des Hydraulikzylinders 3 oder mit einem Schalter bzw. Drucksensor 6, wenn eine kabellose Bremse zum Einsatz kommt, verbunden. Wird der Betätigungshebel 11 in die durch den Pfeil P angedeutete Richtung I bewegt, wird die Bremse geschlossen, wird der Betätigungshebel 11 in die Position II bewegt, ist die Bremse geöffnet. Die Bewegung des Betätigungshebels 11 erfolgt um das erste Gelenk 12. Wie die Figuren zeigen, ist der Betätigungshebel 11 T-förmig ausgebildet. Er besteht aus zwei Rohren, die über die Schraube 11.3 miteinander verschraubt sind.

Der Bügel 17 bildet die Handstütze für den Fahrer. Sie ist vorzugsweise gepolstert und in der Ergonomie an den Fahrer anpassbar.

Bei dem in den Figuren 4 und 5 gezeigten Ausführungsbeispiel ist der Lenker 15 nicht in einem Schlitz angeordnet, sondern über ein drittes Gelenk 19 schwenkbar mit einem zweiten Lenker 16 verbunden, der am vorderen Ende des Betätigungshebels 11 befestigt ist. Im Übrigen entspricht die zweite Ausführungsform der Bremshebelanordnung der ersten Ausführungsform. Die Gelenke 12, 14, 19 bilden Scharniere und sind nur in jeweils einer Ebene beweglich.

### Bezugszeichenliste

- 0: Kurbelantrieb
- 1: Kurbel
- 1.1: Kurbelarm
- 1.2: Kurbelarm
- 1.3: Gewindebohrung
- 1.4: Schraube
- 3: Hydraulikzylinder
- 4: Hydraulikleitung
- 6: Sensor/Drucksensor
- 10: Bremshebelanordnung
- 11: Betätigungshebel
- 11.1: Schlitz
- 11.2: Ende
- 11.3: Schraube
- 12: Erstes Gelenk
- 13: Gehäusekörper
- 14: Zweites Gelenk
- 15: Erster Lenker
- 16: Zweiter Lenker
- 17: Bügel
- 18: Rohr
- 19: Gelenk
- 20: Achse
- 30: Gabel
- I: Geschlossene Position
- II: Offene Position
- P: Pfeil

## Patentansprüche

1. Bremshebelanordnung (10) für ein Fahrzeug mit Kurbelantrieb (0) mit einem Betätigungshebel (11), der über ein Gelenk (12) schwenkbar in einem an einer mit einem Kurbelarm (1.1, 1.2) drehbar verbundenen Kurbel (1) angeordneten Gehäusekörper (13) gelagert ist und zur Betätigung einer Bremse vorgesehen ist, **dadurch gekennzeichnet, dass** der Betätigungshebel (11) über mindestens ein zweites Gelenk (14) mit der Kurbel (1) verbunden ist.

2. Bremshebelanordnung nach Anspruch 1, **dadurch gekennzeichnet, dass** zwischen dem Betätigungshebel (11) und dem zweiten Gelenk (14) mindestens ein erster Lenker (15) angeordnet ist.

3. Bremshebelanordnung nach Anspruch 2, **dadurch gekennzeichnet, dass** der erste Lenker (15) mit seinem dem zweiten Gelenk (14) gegenüberliegenden Ende in einem Schlitz (11.1) verschiebbar geführt ist.

4. Bremshebelanordnung nach Anspruch 3, **dadurch gekennzeichnet, dass** der Schlitz (11.1) am Betätigungshebel (11) vorgesehen ist.

5. Bremshebelanordnung nach Anspruch 2, **dadurch gekennzeichnet, dass** der erste Lenker (15) an seinem dem zweiten Gelenk (14) gegenüberliegenden Ende gelenkig mit einem gelenkig am Betätigungshebel (11) angeordneten zweiten Lenker (16) verbunden ist.

6. Bremshebelanordnung nach einem der vorstehenden Ansprüche, **dadurch gekennzeichnet, dass** der Bremshebel (11) zur Betätigung der Bremse mit einem Seilzug oder einem Hydraulikzylinder (3) in Verbindung bringbar ist.

7. Bremshebelanordnung nach einem der vorstehenden Ansprüche, **dadurch gekennzeichnet, dass** der Bremshebel (11) zur Betätigung der Bremse mit einem Schalter oder einem Sensor (6) in Verbindung bringbar ist.

8. Bremshebelanordnung nach Anspruch 6, **dadurch gekennzeichnet, dass** der erste Lenker (15) mit dem Seilzug oder dem Hydraulikzylinder (1) verbindbar ist.

9. Bremshebelanordnung nach Anspruch 7, **dadurch gekennzeichnet, dass** der erste Lenker (15) mit dem Schalter oder Sensor (6) verbindbar ist.

10. Bremshebelanordnung nach einem der vorstehenden Ansprüche, **dadurch gekennzeichnet, dass** der Betätigungshebel (11) T-förmig ausgebildet ist und/oder an seinem freien Ende (11.2) einen Bügel (17) aufweist.

11. Bremshebelanordnung nach Anspruch 10, **dadurch gekennzeichnet, dass** der Bügel (17) mit dem Betätigungshebel (11) verschraubt ist.

12. Bremshebelanordnung nach einem der vorstehenden Ansprüche, **dadurch gekennzeichnet, dass** der Betätigungshebel (11) ein rohrförmiger Körper ist.

13. Bremshebelanordnung nach einem der vorstehenden Ansprüche, **dadurch gekennzeichnet, dass** der Gehäusekörper (13) mit der Kurbel (1) und vorzugsweise auch mit dem Kurbelarm (1.1, 1.2) verschraubt ist.

14. Bremshebelanordnung nach einem der vorstehenden Ansprüche, **dadurch gekennzeichnet, dass** der Bügel (17) gepolstert ist.

## Claims

1. Brake lever arrangement (10) for a vehicle with a crank drive (0) with an actuating lever (11) which is mounted pivotably via a joint (12) in a housing body (13) which is arranged on a crank (1) which is connected rotatably to a crank arm (1.1, 1.2), which actuating lever (11) is provided for actuating a brake, **characterized in that** the actuating lever (11) is connected via at least a second joint (14) to the crank (1).

2. Brake lever arrangement according to Claim 1, **characterized in that** at least a first link (15) is arranged between the actuating lever (11) and the second joint (14).

3. Brake lever arrangement according to Claim 2, **characterized in that** the first link (15) is guided displaceably in a slot (11.1) with its end which lies opposite the second joint (14).

4. Brake lever arrangement according to Claim 3, **characterized in that** the slot (11.1) is provided on the actuating lever (11).

5. Brake lever arrangement according to Claim 2, **characterized in that**, at its end which lies opposite the second joint (14), the first link (15) is connected in an articulated manner to a second link (16) which is arranged in an articulated manner on the actuating lever (11).

6. Brake lever arrangement according to one of the preceding claims, **characterized in that** the brake lever (11) can be connected to a control cable or a hydraulic cylinder (3) in order to actuate the brake.

7. Brake lever arrangement according to one of the preceding claims, **characterized in that** the brake lever (11) can be connected to a switch or a sensor (6) in order to actuate the brake.

8. Brake lever arrangement according to Claim 6, **characterized in that** the first link (15) can be connected to the control cable or the hydraulic cylinder (1).

9. Brake lever arrangement according to Claim 7, **characterized in that** the first link (15) can be connected to the switch or sensor (6).

10. Brake lever arrangement according to one of the preceding claims, **characterized in that** the actuating lever (11) is of T-shaped configuration and/or has a bracket (17) at its free end (11.2).

11. Brake lever arrangement according to Claim 10, **characterized in that** the bracket (17) is screwed to the actuating lever (11).

12. Brake lever arrangement according to one of the preceding claims, **characterized in that** the actuating lever (11) is a tubular body.

13. Brake lever arrangement according to one of the preceding claims, **characterized in that** the housing body (13) is screwed to the crank (1) and preferably also to the crank arm (1.1, 1.2).

14. Brake lever arrangement according to one of the preceding claims, **characterized in that** the bracket (17) is padded.

## Revendications

1. Agencement de levier de frein (10) pour un véhicule avec entraînement à manivelle (0) avec un levier d'actionnement (11), lequel est monté via une articulation (12) avec faculté de pivotement dans un corps de boîtier (13) agencé sur une manivelle (2) reliée avec faculté de rotation à un bras de manivelle (1.1, 1.2) et est prévu pour actionner un frein, **caractérisé en ce que** le levier d'actionnement (11) est relié à la manivelle (1) via au moins une seconde articulation (14).

2. Agencement de levier de frein selon la revendication 1, **caractérisé en ce qu'**au moins un premier bras (15) est agencé entre le levier d'actionnement (11) et la seconde articulation (14).

3. Agencement de levier de frein selon la revendication 2, **caractérisé en ce que** le premier bras (15) est guidé en translation dans une fente (11.1) avec son extrémité opposée à la seconde articulation (14).

4. Agencement de levier de frein selon la revendication 3, **caractérisé en ce que** la fente (11.1) est prévue sur le levier d'actionnement (11).

5. Agencement de levier de frein selon la revendication 2, **caractérisé en ce que** le premier bras (15) est relié, à son extrémité opposée à la seconde articulation (14), de manière articulée à un second bras (16) agencé de façon articulée sur le levier d'actionnement (11).

6. Agencement de levier de frein selon l'une des revendications précédentes, **caractérisé en ce que** le levier de frein (11) est susceptible d'être amené en liaison avec un mécanisme à câble ou avec un cylindre hydraulique (3) pour l'actionnement du frein.

7. Agencement de levier de frein selon l'une des revendications précédentes, **caractérisé en ce que** le levier de frein (11) est susceptible d'être amené en liaison avec un commutateur ou avec un capteur (6) pour l'actionnement du frein.

8. Agencement de levier de frein selon la revendication 6, **caractérisé en ce que** le premier bras (15) est susceptible d'être relié au mécanisme à câble ou au cylindre hydraulique (1).

9. Agencement de levier de frein selon la revendication 7, **caractérisé en ce que** le premier bras (15) est susceptible d'être relié au commutateur ou au capteur (6).

10. Agencement de levier de frein selon l'une des revendications précédentes, **caractérisé en ce que** le levier d'actionnement (11) est réalisé en forme de T, et/ou comprend un arceau (17) à son extrémité libre (11.2).

11. Agencement de levier de frein selon la revendication 10, **caractérisé en ce que** l'arceau (17) est assemblé par vissage avec le levier d'actionnement (11).

12. Agencement de levier de frein selon l'une des revendications précédentes, **caractérisé en ce que** le levier d'actionnement (11) est un corps de forme tubulaire.

13. Agencement de levier de frein selon l'une des revendications précédentes, **caractérisé en ce que** le corps de boîtier est assemblé par vissage avec la manivelle (1) et de préférence également avec le bras de manivelle (1.1, 1.2).

14. Agencement de levier de frein selon l'une des revendications précédentes, **caractérisé en ce que** l'arceau (17) est rembourré.
